# EUROPÄISCHE PATENTSCHRIFT

(11) **EP 1 159 546 B1**
(45) Veröffentlichungstag und Bekanntmachung des Hinweises auf die Patenterteilung: **28.05.2003**
(21) Anmeldenummer: 00920485.0
(22) Anmeldetag: 10.03.2000
(51) Int. Cl.: F16D 33/06, F16H 45/02

(54) **ANFAHREINHEIT**
STARTING UNIT
UNITE DE DEMARRAGE

(30) Priorität: 12.03.1999 DE 29904558 U; 15.03.1999 DE 19911356
(43) Veröffentlichungstag der Anmeldung: 05.12.2001
(73) Patentinhaber: Voith Turbo GmbH & Co. KG, 89522 Heidenheim (DE)
(72) Erfinder: KLEMENT, Werner, D-89520 Heidenheim (DE); VOGELSANG, Klaus, D-74564 Crailsheim (DE); EDELMANN, Peter, D-89522 Heidenheim (DE); HÖLLER, Heinz, D-74564 Crailsheim (DE); FRIEDRICH, Jürgen, D-74564 Crailsheim (DE)
(74) Vertreter: Dr. Weitzel & Partner
(86) Internationale Anmeldenummer: EP0002109
(87) Internationale Veröffentlichungsnummer: WO00055519

(56) Entgegenhaltungen:
- EP-A- 0 508 528
- DE-A- 3 730 339
- DE-A- 4 122 628
- DE-A- 19 650 339
- US-A- 4 673 071

## Beschreibung

Die Erfindung betrifft eine Anfahreinheit für den Einsatz in Schaltgetrieben, insbesondere automatisierten Schaltgetrieben, in Antriebssystemen, insbesondere für den Einsatz in Fahrzeugen, im einzelnen mit den Merkmalen aus dem Oberbegriff des Anspruchs 1; ferner ein automatisiertes Schaltgetriebe.

Getriebe für den Einsatz in Nutzkraftwagen, insbesondere in Form von Schaltgetrieben oder automatisierten Schaltgetrieben sind in einer Vielzahl von Ausführungen bekannt. Diesen gemeinsam ist in der Regel, dass der Anfahrvorgang über eine Kupplungseinrichtung in Form einer Reibkupplung oder eines hydrodynamischen Wandlers realisiert wird. Problematisch gestaltet sich die Verwendung einer Reibungskupplung als Anfahrelement jedoch in den Funktionszuständen, welche durch einen erhöhten Schlupf über einen längeren Zeitraum gekennzeichnet sind. Dies gilt insbesondere für den Anfahrvorgang. Aufgrund der enormen thermischen Beanspruchung ist die Kupplungseinrichtung dann einem erhöhten Verschleiß unterworfen. Um diesen möglichst gering zu halten, sind entsprechende Anforderungen an den zu verwendenden Reibbelag zu stellen. Des weiteren bedingen die Verschleißerscheinungen geringere Standzeiten für das Anfahrelement. Der Nachteil von Lösungen mit Anfahrelementen in Form von hydrodynamischen Wandlern besteht im wesentlichen in den hohen Kosten für den hydrodynamischen Teil, dem Erfordernis des Vorsehens einer Trennkupplung sowie der erforderlichen Überdimensionierung des mechanischen Getriebeteiles.

Eine Ausführung einer Getriebebaueinheit mit einem Anfahrelement in Form einer Turbokupplung ist aus der Druckschrift DE 196 50 339 A1 bekannt. Mit dieser werden mindestens zwei Betriebszustände - ein erster Betriebszustand zur Leistungsübertragung in wenigstens zwei Gangschaltstufen und ein zweiter Betriebszustand zur Abbremsung realisiert. Dabei werden beide Funktionen über die Turbokupplung realisiert. Diese umfasst ein Pumpenrad und ein Turbinenrad, die miteinander einen torusförmigen Arbeitsraum bilden. Die Realisierung der Funktion eines hydrodynamischen Retarders erfolgt durch Zuordnung der Funktion des Statorschaufelrades, entweder durch Festsetzung gegenüber den ruhenden Getriebeteilen zum Pumpenrad und der Funktion des Rotorschaufelrades zum Turbinenrad oder der Zuordnung der Funktion des Statorschaufelrades zum Turbinenschaufelrad durch Festsetzen des Schaufelrades gegenüber den ruhenden Getriebeteilen und der Funktion des Rotorschaufelrades zum Pumpenrad. Das die Funktion des Rotorschaufelrades übernehmende Schaufelrad ist in beiden Fällen mit der Getriebeausgangswelle über den mechanischen Getriebeteil gekoppelt. Die Anbindung der Turbokupplung an die Antriebswelle bzw. den mechanischen Getriebeteil der Getriebebaueinheit erfolgt dabei derart, dass zur Realisierung des ersten Betriebszustandes das Turbinenrad mit dem mechanischen Getriebeteil und das Pumpenrad mit der Getriebeeingangswelle verbindbar ist, während zur Realisierung der zweiten Betriebsweise, d.h. Abbremsung, eines der beiden Schaufelräder festgesetzt wird. Zu diesem Zweck sind der Turbokupplung, insbesondere einem Schaufelrad der Turbokupplung Mittel zur Festsetzung und Entkopplung vom Antriebsstrang zugeordnet. Diese Ausführung erlaubt zwar die Gestaltung einer besonders kompakten Getriebebaueinheit, ein wesentlicher Nachteil besteht jedoch darin, dass die Realisierung der beiden Funktionsweisen eine entsprechend modifizierte Ausgestaltung bzw. Auslegung der Anschlusselemente bedingt und des weiteren, dass beide Funktionen nur wechselweise genutzt werden können, d.h. dass während des Betriebszustandes der Leistungsübertragung über die hydrodynamische Kupplung keine Erzeugung eines Bremsmomentes mittels einer Dauerbremseinrichtung, insbesondere einem hydrodynamischen Retarder möglich ist. Des weiteren ist aufgrund der speziellen Form der Anbindung keine Schaffung eines standardisierten Anfahrelementes möglich, welches auch frei austauschbar in bereits vorhandene Getriebebaueinheiten einsetzbar wäre.

Eine Ausführung einer Anfahreinheit, umfassend eine hydrodynamische Kupplung und eine parallel zu dieser geschalteten Überbrückungskupplung ist aus der Druckschrift US-PS 4,673,071 vorbekannt. Diese umfaßt des weiteren eine zwischen Turbinenrad und Ausgang der Anfahreinheit angeordnete Trennkupplung, welche im dargestellten Fall aus Gründen der Raumersparnis radial innerhalb eines Durchmessers, welcher durch den inneren Durchmesser des torusförmigen Arbeitsraumes charakterisiert ist, angeordnet ist und somit nur unmerklich Bauraum in axialer Richtung zusätzlich benötigt wird, was insbesondere dem zunehmenden Erfordernis nach einer kürzeren Getriebebaueinheit Rechnung trägt. Ein wesentlicher Nachteil einer derartigen Lösung besteht jedoch darin, daß zum einen die Trennkupplung, welche in dieser Ausführung als Lamellenkupplung ausgeführt ist, immer an der Leistungsübertragung beteiligt ist und somit theoretisch für die maximal möglich übertragbare Leistung ausgelegt sein muß, was wiederum zu Kompromissen bezüglich des Bauraumbedarfes und der übertragbaren Leistung und der damit verbundenen Anordnung der Trennkupplung führt. Des weiteren handelt es sich bei diesem Bauelement um ein System bedingt mit Verschleißarbeiten des Bauelementes, welches wiederum die Lebensdauer der Gesamtanfahreinheit und damit auch der Getriebebaueinheit bei Anbindung der Anfahreinheit an Nachschaltstufen zur Folge hat. Der steuerungstechnische Aufwand bei Realisierung von Schaltvorgängen ist ebenfalls sehr hoch.

Der Erfindung liegt daher die Aufgabe zugrunde, eine Anfahreinheit für den Einsatz in Schaltgetriebebaueinheiten, insbesondere mit Eignung für den Einsatz in automatisierten Schaltgetrieben in Antriebssystemen von Fahrzeugen, Nutzkraftwagen derart weiterzuentwickeln, dass die oben genannten Nachteile vermieden werden. Im einzelnen ist dabei auf die Realisierung eines möglichst verschließfreien Anfahrvorganges unabhängig von der Zeitdauer des Zustandes erhöhten Schlupfes abzustellen. Die Anfahreinheit selbst sollte dabei durch einen geringen konstruktiven und steuerungstechnischen Aufwand charakterisierbar und leicht in das Antriebssystem beziehungsweise in eine Kraftübertragungseinheit, beispielsweise in Form einer Getriebebaueinheit integrierbar sein, wobei den zunehmend erhöhten Anforderungen an die geringe Baulänge Rechnung getragen werden sollte. Des weiteren muß beim Einsatz in Schaltgetrieben oder automatisierten Schaltgetrieben besteht bei Schaltvorgängen die Möglichkeit einer Unterbrechung des Schaltflußes zwischen einer Antriebsmaschine und den der Anfahreinheit nachgeordneten Schaltstufen mit einfachen Mitteln ohne erheblichen zusätzlichen Aufwand realisierbar seien.

Unter einem weiteren Aspekt der Erfindung sollen die Vorteile einer muitifunktionalen Komponente beibehalten werden, wobei diese jedoch in einfacher Art und Weise auch in bereits vorhandene Schaltgetriebebaueinheiten, insbesondere automatisierte Schaltgetriebe einfügbar sein muß.

Die erfindungsgemäße Lösung ist durch die Merkmale des Anspruchs 1 charakterisiert. Vorteilhafte Ausgestaltungen sind jeweils in den Unteransprüchen beschrieben.

Erfindungsgemäß umfaßt die Anfahreinheit ein Anfahrelement in Form einer Turbokupplung und eine Überbrückungskupplung, die miteinander parallel geschaltet, jedoch nur während zeitlich geringer oder definierter Phasen beide gemeinsam in Eingriff sind, wobei der Leistungsfluß zwischen dem Eingang und dem Ausgang der Anfahreinheit vollständig unterbrechbar ist. Diese Unterbrechbarkeit kann dabei beim Einsatz der Anfahreinheit in automatisierten Schaltgetrieben mit nachgeschlossenem mechanischen Getriebeteil durch die Schaltbarkeit der Überbrückungskupplung bei gleichzeitiger Entleerung bzw. bereits geleerter Turbokupplung oder beim Einsatz in automatisierten Schaltgetrieben mit mechanischem Getriebeteil und Nach- bzw. Gruppenschaltsatz beim Umschalten zwischen den ersten beiden unteren Gangstufen durch die Entleerung der Turbokupplung erfolgen. Vorzugsweise sind bei einer derartigen Ausführung die Abtriebsseiten von hydrodynamischer Kupplung und Überbrückungskupplung miteinander drehfest verbunden. Der Vorteil einer derartigen Anordnung besteht darin, daß im wesentlichen jeweils nur zwei Zustände bezüglich der Leistungsübertragung vom Antrieb zum Abtrieb unterschieden werden können, wobei die Leistungsübertragung entweder rein mechanisch über die Überbrückungskupplung oder über das hydrodynamische Bauelement, die Turbokupplung erfolgt. Dies ermöglicht durch geeignete Ansteuerung die Ausnutzung der Vorteile der Leistungsübertragung mittels hydrodynamischer Komponenten für bestimmte Fahrzustände, insbesondere für den Anfahrzustand. Dieser kann vollständig verschleißfrei erfolgen, wobei in allen anderen Fahrzuständen eine vollständige Überbrückung der schlupfbehafteten Turbokupplung realisiert wird. Ab einem bestimmten Schlupfzustand, welcher abhängig von der Auslegung der Turbokupplung ist, erfolgt die Überbrückung durch eine Kopplung zwischen Pumpen- und Turbinenrad mittels der mechanischen Überbrückungskupplung. Die Antriebsleistung von einer mit der Anfahreinheit koppelbaren Antriebsmaschine wird dann mit nur geringen Verlusten, bedingt durch die mechanischen Übertragungssysteme und die notwendige Hilfsenergie, auf den Abtrieb übertragen. Da für den Einsatz in Schaltgetrieben, insbesondere synchronisierten Schaltgetrieben beim Wechsel zwischen zwei Gangstufen die Verbindung zwischen der Antriebsmaschine und dem Abtrieb in der Regel getrennt werden sollte, wird diese Aufgabe der Überbrückungskupplung zugeordnet.

Bezüglich des Aufbaus des Anfahrelementes sind die Komponenten Turbokupplung und Überbrückungskupplung in der Regel in unmittelbarer räumlicher Nähe zueinander angeordnet.

Die drehfeste Verbindung zwischen den Abtriebsseiten von Turbokupplung und Überbrückungskupplung kann dabei lösbar oder unlösbar bezüglich der Montage erfolgen. Die Verbindung selbst kann im erstgenannten Fall formund/oder kraftschlüssig erfolgen. im zweiten Fall wird die drehfeste Verbindung entweder durch Stoffschluß oder durch Ausführung als integrale Baueinheit von Turbinenrad der Turbokupplung und Abtrieb der Überbrückungskupplung - bei Ausführung als mechanische Kupplung in Lamellenbauweise in Form der Kupplungsausgangsscheibe der Überbrückungskupplung realisiert. Die Auswahl der Verbindungsart erfolgt dabei in Abhängigkeit von der vorzunehmenden Auslegung der Turbokupplung und/oder Überbrückungskupplung und den konkreten Erfordernissen des Einsatzfalles.

Die Überbrückungskupplung ist als mechanische Reibkupplung, vorzugsweise in Lamellenbauart, vorzugsweise naßlaufend ausgeführt.

Vorzugsweise erfolgt die Integration beider Kompomenten, Turbokupplung und Überbrückungskupplung, in einem gemeinsamen Gehäuse, wobei die Überbrückungskupplung im Betriebsmittel der Turbokupplung umläuft. Das gemeinsam genutzte Gehäuse kann dabei entweder vom Gehäuse der Turbokupplung, einem separaten Gehäuse oder den Anschlußelementen - beispielsweise dem Gehäuse der Antriebsmaschine und/oder des Getriebes bei Integration in einem Antriebssystem für ein Fahrzeug - gebildet werden. Denkbar ist in diesem Fall beispielsweise die Ausbildung des Gehäuses entweder allein von der mit der Anfahreinheit koppelbaren Antriebsmaschine und/oder der mit der Anfahreinheit koppelbaren Getriebebaueinheit oder von beiden anschließenden Komponenten.

Die erfindungsgemäß gestaltete Anfahreinheit baut sehr klein und hat somit bei Integration in einer Getriebebaueinheit, insbesondere einem automatisierten Schaltgetriebe nur geringen Einfluß auf die Baulänge. Die Einheit aus Turbokupplung und Überbrückungskupplung kann als modulare Baueinheit vormontiert im Handel angeboten und geliefert werden. Die Integration in einer Getriebebaueinheit erfolgt dann kraftschlüssig und/oder formschlüssig, beispielsweise durch Aufstecken der modularen Baueinheit auf die Getriebeeingangswelle oder die Realisierung einer Welle-Nabe-Verbindung zwischen dem Abtrieb der Anfahreinheit und dem Eingang der Getriebebaueinheit, wobei die Kopplung durch eine mechanische Verbindung mit dem Gehäuse der Getriebebaueinheit und/oder der Antriebsmaschine erfolgt. Unter einem weiteren Aspekt der Erfindung können die Anschlußelemente des Anfahrelementes - Antrieb und Abtrieb - für eine Mehrzahl unterschiedlich ausgelegter Anfahreinheiten standardisiert ausgeführt werden, was zu einer Verringerung der Fertigungskosten führt und in Kombination mit Getriebebaueinheiten zur Anpassung an verschiedene Einsatzfälle eine leichte Austauschbarkeit der Anfahreinheiten ermöglicht.

Unter einem weiteren Aspekt der Erfindung handelt es sich bei der Überbrückungskupplung um eine mechanische Kupplung in Scheibenbauweise, die als nasse Lamellenkupplung ausgeführt ist. Dies bedeutet, daß die Lamellen naß laufen. Dies kann auf einfache Art und Weise dadurch realisiert werden, daß das sich außerhalb des Arbeitsraumes der Turbokupplung befindliche Betriebsmittel gleichzeitig als Schmiermittel für die Überbrückungskupplung genutzt wird. Dabei handelt es sich in der Regel um das im Betriebsmittelsumpf des Kupplungsgehäuses oder in einer Kupplungsschale oder Speicherkammer angesammelte Betriebsmittel. In diesem Fall sind keine zusätzlichen Abdichtmaßnahmen zwischen Turbokupplung und Überbrückungskupplung vorzusehen, die Überbrückungskupplung ist in einfacher Weise im Kupplungsgehäuse der Turbokupplung integrierbar und es kann eine Betriebsmittelversorgungsquelle für zwei unterschiedliche Funktionen, nämlich die Funktion der hydrodynamischen Kupplung als Anfahrelement und die Schmierung der Überbrückungskupplung verwendet werden. Damit wird eine hinsichtlich Aufbau und Funktionalität besonders kompakte Bauform einer verschleißfreien Anfahreinheit realisiert.

Zur Schaffung einer multifunktionalen Anfahreinheit weist dieses unter einem weiteren Aspekt der Erfindung des weiteren wenigstens ein Bremselement auf, welches vorzugsweise in Form eines hydrodynamischen Retarders ausgeführt ist. Bezüglich der Anbindung des Bremselementes an das Anfahrelement bestehen grundsätzlich die folgenden zwei Möglichkeiten:
a) Anbindung der Bremseinrichtung an den Antrieb bzw. den Eingang des Anfahrelementes
b) Anbindung der Bremseinrichtung an den Abtrieb des Anfahrelementes

Im erstgenannten Fall sind wenigstens die nachfolgenden zwei Möglichkeiten der Anbindung denkbar:
a) Koppelung der Bremseinrichtung mit dem Pumpenrad der Turbokupplung
b) Koppelung der Bremseinrichtung mit dem Eingang, beispielsweise der Antriebswelle des Anfahrelementes.

Die erstgenannte Möglichkeit bietet den Vorteil, daß bei Ausführung der Bremseinrichtung in Form eines hydrodynamischen Retarders der Rotor des hydrodynamischen Retarders mit dem Pumpenrad der Turbokupplung drehfest verbunden ist, wobei der Rotor der hydrodynamischen Bremseinrichtung und das Pumpenrad der Turbokupplung entweder auf einer gemeinsamen Welle angeordnet sind oder aber Rotor und Pumpenrad aus einem Bauelement gebildet werden.

Bezüglich der räumlichen Anordnung der Bremseinrichtung gegenüber den anderen Komponenten des Anfahrelementes bestehen folgende Möglichkeiten:
a) Anordnung in Einbaulage im Antriebssystem in Kraftflußrichtung vom Antrieb zum Abtrieb betrachtet vor der Turbokupplung
b) Anordnung in Einbaulage im Antriebssystem in Kraftflußrichtung vom Antrieb zum Abtrieb betrachtet zwischen Überbrückungskupplung und Turbokupplung
c) Anordnung in Einbaulage im Antriebssystem in Kraftflußrichtung vom Antrieb zum Abtrieb betrachtet hinter der Turbokupplung.

In jedem der genannten Fälle erfolgt jedoch die Anordnung der Bremseinrichtung, insbesondere des hydrodynamischen Retarders in räumlicher Nähe zur Turbokupplung bzw. Überbrückungskupplung. Die Bremseinrichtung kann in der modularen Einheit aus Turbokupplung und Überbrückungskupplung integriert werden. Dies bietet den Vorteil, daß zum einen eine vormontierbare und selbständig handelbare multifunktionale Anfahr- und Bremseinheit zur Integration in Antriebssträngen, insbesondere für Getriebebaueinheiten geschaffen wird und aufgrund der möglichen Verwendung gleicher Betriebsmittel, beiden Systemen ein gemeinsames Betriebsmittelversorgungs- und/oder Führungssystem zugeordet werden kann, wobei gleichzeitig die Kühleinrichtungen und/oder Steuereinrichtungen gemeinsam nutzbar sind. Diese Einrichtungen können zusätzlich in der modularen Einheit integriert werden. Die gemeinsame Nutzung von Kühleinrichtungen und/oder Steuereinrichtungen ist jedoch nicht an die gemeinsame Nutzung eines Betriebsmittelversorgungs- und/oder Führungssystems gebunden, jeder Komponente kann ein eigenes System zugeordnet sein.

Der Vorteil eines gemeinsamen Betriebsmittelversorgungs- und/oder Führungssystems und/oder einer gemeinsam nutzbaren Kühleinrichtung für das Betriebsmedium besteht in einer Verringerung des konstruktiven Aufwandes für die zur Realisierung der Funktionsweise der hydrodynamischen Elemente erforderlichen Leitungssysteme, insbesondere kann eine optimale Ausnutzung der Systeme erfolgen, da die Inbetriebnahme der Turbokupplung und des hydrodynamischen Retarders bei unterschiedlichen Funktionszuständen erfolgt. Der hydrodynamische Retarder nutzt damit quasi das Betriebsmittelversorgungssystem und/oder die Kühleinrichtung bzw. das Kühlsystem in den Funktionszuständen, in welchen die Turbokupplung nicht betätigt ist, während die Turbokupplung das Betriebsmittelversorgungs - bzw. Führungssystem und/oder die Kühleinrichtung bzw. das Kühlsystem in den Funktionszuständen ausnutzt, in welchen der Retarder nicht betätigt ist. Die Auslegung des Betriebsmittelversorgungssystems und/oder der Kühleinrichtungen bzw. des Kühlsystems erfolgt dabei entsprechend der höher belasteten Komponente, wobei eine optimale Ausnutzung durch die wechselseitige Nutzung durch Turbokupplung und hydrodynamischen Retarder gewährleistet wird.

Als weitere Komponente umfaßt die Anfahreinheit vorzugsweise eine Einrichtung zur Schwingungsdämpfung, vorzugsweise einen Torsionsschwingungsdämpfer. Dieser ist funktional entweder der Antriebsseite, wobie diese Ausführung besonders vorteilhaft ist, oder der Abtriebsseite zuordenbar, wobei bezüglich der räumlichen Anordnung zwischen der Anordnung des Torsionsschwingungsdämpfers in Einbaulage betrachtet
a) räumlich vor der Turbokupplung und vor der Überbrückungskupplung,
b) räumlich vor der Turbokupplung und hinter der Überbrückungskupplung oder
c) räumlich hinter der Turbokupplung
unterschieden werden kann.

Die Kombination aus Turbokupplung, Überbrückungskupplung sowie eventuell zusätzlich hydrodynamischen Retarder und/oder Torsionsschwingungsdämpfer und die Integration in einer modularen Baueinheit ermöglicht die Schaffung einer multifunktionalen Antriebskomponente mit geringem Bauraumbedarf, wobei diese Elemente in einem gemeinsamen Gehäuse integriert sein können. Als gemeinsames Gehäuse kann dabei das Gehäuse der Turbokupplung und/oder des hydrodynamischen Retarders verwendet werden. Denkbar ist es jedoch auch, das Gehäuse von den Gehäusen der Anschlußelemente zu bilden. Die Koppelung mit den Anschlußelementen, beispielsweise einer Getriebebaueinheit, insbesondere dem mechanischen Übertragungsteil einer Getriebebaueinheit, erfolgt durch Kraft- und/oder Formschluß. Im einfachsten Fall wird die gesamte modulare Baueinheit auf die Getriebeeingangswelle aufgesteckt. Andere Ausführungen der Realisierung der Verbindung zwischen dem Abtrieb der Anfahreinheit und Getriebeeingangswelle sind denkbar und liegen im Ermessen des zuständigen Fachmannes.

Die erfindungsgemäße Lösung wird nachfolgend anhand von Figuren erläutert. Darin ist im einzelnen folgendes dargestellt:
- Figur 1: verdeutlicht schematisch eine Ausführungsform der erfindungsgemäßen Lösung mit einer Anbindung des hydrodynamischen Retarders an den Antrieb des Anfahrelementes und Anordnung einer Einrichtung zur Schwingungsdämpfung zwischen Überbrückungskupplung und Turbokupplung;
- Figur 2: verdeutlicht eine Ausführung gemäß Figur 1 mit einer Anordnung einer Einrichtung zur Schwingungsdämpfung vor der Überbrückungskupplung;
- Figur 3: verdeutlicht eine weitere Ausführung einer Anfahreinheit mit Anbindung des hydrodynamischen Retarders an den Abtrieb des Anfahrelementes;
- Figur 4: verdeutlicht eine Ausführung gemäß Figur 3 mit Anordnung des Torsionsschwingungsdämpfers vor dem Eingang der Überbrückungskupplung;
- Figur 5: zeigt eine mögliche konstruktive Ausführung einer Anfahreinheit gemäß Figur 1.

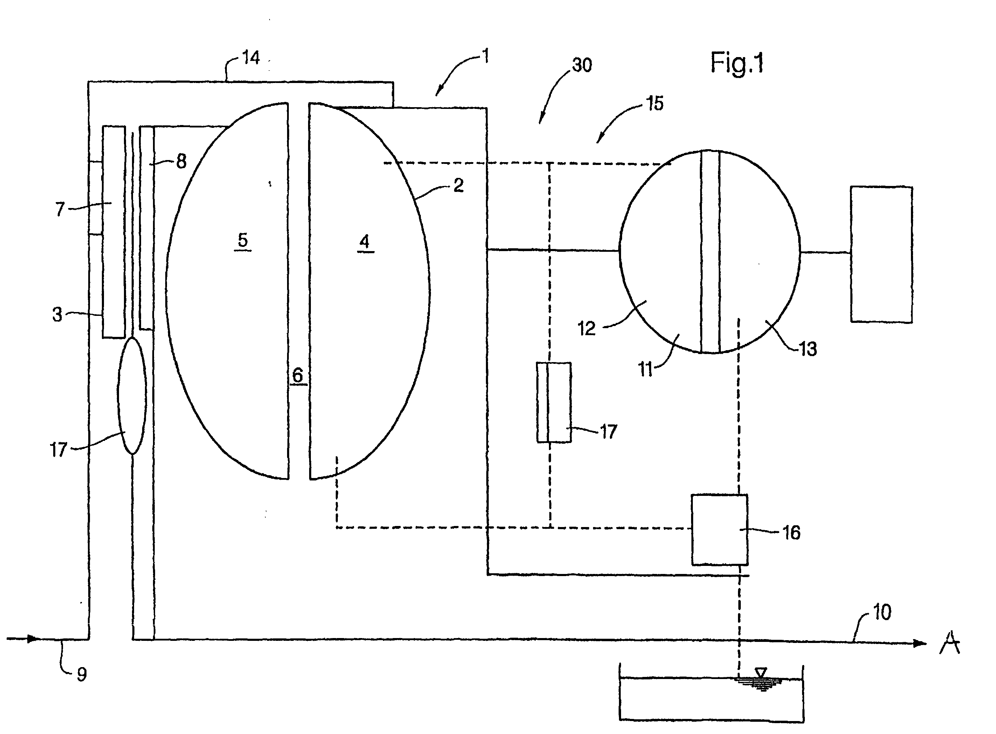

Die Figur 1 verdeutlicht in schematisch vereinfachter Darstellung eine Ausgestaltung einer erfindungsgemäß gestalteten Anfahreinheit 30, umfassend ein Anfahrelement 1. Dieses umfaßt wenigstens eine Turbokupplung 2 und eine Überbrückungskupplung 3. Die Turbokupplung 2 und die Überbrückungskupplung 3 sind parallel geschaltet. Die Turbokupplung 2 umfaßt wenigstens ein als Pumpenrad 4 fungierendes Primärrad und ein als Turbinenrad 5 fungierendes Sekundärrad, welche miteinander einen torusförmigen Arbeitsraum 6 bilden. Die Überbrückungskupplung 3 ist als Scheibenkupplung ausgeführt, vorzugsweise in Form einer Lamellenkupplung. Diese umfaßt wenigstens eine Kupplungseingangsscheibe 7 und eine Kupplungsausgangsscheibe 8, welche wenigstens mittelbar reibschlüssig miteinander in Wirkverbindung bringbar sind. Die Anfahreinheit 30 umfaßt des weiteren einen, mit einer hier nicht dargestellten Antriebsmaschine wenigstens mittelbar koppelbaren Antrieb bzw. Eingang E und einen mit dem Abtrieb im Antriebssystem wenigstens mittelbar koppelbaren Abtrieb A. Antrieb E und Abtrieb A sind in der Regel in Form von Voll- oder Hohlwellen ausgeführt. Erfindungsgemäß ist der Leistungsfluß in der Anfahreinheit vollständig unterbrechbar. Desweiteren sind die Abtriebsseite 10 der Turbokupplung 2 und die Abtriebsseite der Überbrückungskupplung 3 miteinander drehfest verbunden. Als Abtriebsseite der Turbokupplung 2 fungiert dabei das Turbinenrad 5 und als Abtriebsseite der Überbrückungskupplung 3 die Kupplungsausgangsscheibe 8. Der Leistungsfluß über die Anfahreinheit erfolgt beim Einsatz in Fahrzeugen im Traktionsbetrieb betrachtet, d.h. bei Leistungsübertragung von einer Antriebsmaschine auf die anzutreibenden Räder entweder über die Turbokupplung 2 oder die Überbrückungskupplung 8. Der Abtrieb der Turbokupplung 2, d.h. das Turbinenrad 5 und der Abtrieb der Überbrückungskupplung 3, d.h. die Kupplungsausgangsscheibe 8 sind zu diesem Zweck wenigstens mittelbar mit dem Abtrieb 10 des Anfahrelementes 1 drehfest verbunden, welcher bei Integration des Anfahrelementes 1 in einer Getriebebaueinheit, insbesondere eines automatisierten Schaltgetriebes gleichzeitig als Antrieb bzw. Eingang der nachgeordneten Drehzahl-/Drehmomentenwandlungseinrichtungen, beispielsweise in Form von Planetenradsätzen und/oder Stirnradsätzen fungiert.

Die räumliche Anordnung der Überbrückungskupplung 3 gegenüber der Turbokupplung 2 erfolgt bei Integration der Anfahreinheit 30 in einem Antriebsstrang in Einbaulage in Kraftflußrichtung betrachtet räumlich vor der Turbokupplung 2. Die Realisierung des Anfahrvorganges erfolgt durch Betätigung bzw. Leistungsübertragung über die Turbokupplung 2. Die Überbrückungskupplung 3 ist in diesem Zustand nicht betätigt. Die Turbokupplung 2 übernimmt dabei die im wesentlichen verschleißfreie Übertragung des Momentes der mit der Anfahreinheit 30 gekoppelten Antriebsmaschine. In Abhängigkeit von der Auslegung der Turbokupplung 2 erfolgt ab Erreichen eines bestimmten Schlupfzustandes deren Überbrückung durch eine Kopplung von Pumpenrad 4 und Turbinenrad 5 mittels der Überbrückungskupplung 3. Die Vorzüge hydrodynamischer Leistungsübertragung werden dadurch im Bereich hoher Drehzahldifferenzen, d.h. im Anfahrbereich voll ausgenutzt, während in allen anderen Fahrzuständen, in denen sich eine hydrodynamische Leistungsübertragung negativ auf den Gesamtwirkungsgrad auswirken würde, der hydrodynamische Teil aus dem Leistungsfluß herausgenommen und die Leistung nach Abschluß des Anfahrvorganges durch Schließen der Überbrückungskupplung 3 im wesentlichen ohne Verluste auf den Abtrieb 10 und damit beim Einsatz in Fahrzeugen auf die Räder übertragen wird. Insbesondere wird dabei auf die Möglichkeit der nahezu verschleißfreien Leistungsübertragung im Bereich hohen Kupplungsschlupfes über einen sehr langen Zeitraum verwiesen.

Die Anfahreinheit 30 umfaßt des weiteren eine Bremseinrichtung 11, welche vorzugsweise als hydrodyamischer Retarder ausgeführt ist, um die Vorteile der hydrodynamischen Leistungsübertragung auch für den Bremsvorgang nutzen zu können. Der hydrodynamische Retarder 11 umfaßt dazu einen Rotor 12 und einen Stator 13. Die Anbindung des Rotors 12 und damit die Wirkung des hydrodynamischen Retarders erfolgt entsprechend Figur 1 an den Antrieb E. Zu diesem Zweck kann der Rotor 12 des hydrodynamischen Retarders 11 beispielsweise direkt mit dem Pumpenrad 4 der Turbokupplung 2 koppelbar sein oder direkt auf den Antrieb A bzw. auf die Verbindung 14 des Antriebes E mit dem Pumpenrad 4 der Turbokupplung 2 einwirken. Der hydrodynamische Retarder 11 ist somit rein funktional betrachtet vor der Turbokupplung bzw. der Überbrückungskupplung angeordnet, räumlich jedoch in Einbaulage des Anfahrelementes bei Leistungsübertragung im Traktionsbetrieb vom Antrieb E zum Abtrieb A der Anfahreinheit 30 hinter der Überbrückungskupplung und der Turbokupplung 2 angeordnet. Die beiden hydrodynamischen Komponenten - Turbokupplung 2 und hydrodynamischer Retarder 11 - sind räumlich eng beieinander angeordnet. Dies bietet den Vorteil, daß beispielsweise die Versorgungsleitungen für die hydrodynamischen Komponenten Turbokupplung 2 und hydrodynamischer Retarder 11 möglichst kurz gehalten werden können und zusätzlich beiden Komponenten ein gemeinsames Betriebsmittelversorgungssystem zugeordnet werden kann. Das Betriebsmittelversorgungssystem ist hier mit 15 bezeichnet. Dieses umfaßt Mittel zur Förderung des Betriebsmittels, beispielsweise eine Pumpeinrichtung 16 in Form einer Zahnradpumpe sowie Mittel zur Beeinflussung des Betriebsmittelumlaufes, beispielsweise in Form eines, hier nicht dargestellten Steuer- und/oder Regelsystems, umfassend wenigstens eine Steuereinrichtung und Stelleinrichtungen. Bei einem gemeinsam genutzten Betriebsmittelversorgungssystem werden auch die Mittel zur Kühlung des Betriebsmittels 18, welche beispielsweise in Form von Kühleinrichtungen oder von Wärmeaustauschern ausgeführt sind, von beiden Komponenten genutzt. Das Betriebsmittelversorgungssystem kann dabei als offener Kreislauf oder geschlossener Kreislauf ausgeführt sein. Im dargestellten Fall ist das Betriebsmittelversorgunsgsystem als offener Kreislauf 15 ausgeführt, wobei als Betriebsmittelversorgungsquelle beispielsweise ein Tank im Gehäuse der Turbokupplung 2 vorgesehen werden kann. Die Darstellung des Betriebsmittelversorgungssystems erfolgt in der Figur zu Erläuterungszwecken rein schematisch hinsichtlich der Funktionsweise.

Die Turbokupplung 2, die Überbrückungskupplung 3 sowie der hydrodynamische Retarder 11 bilden vorzugsweise eine modulare Baueinheit, welche vormontierbar und als eigenständige Baueinheit anbietbar und handelbar ist. Diese ist beispielsweise als Modul in einem Getriebe integrierbar. Die Integration kann dabei durch Aufstecken, Anflanschen oder eine andere Art der Verbindung realisiert werden. Zusätzlich im Modul integriert ist eine Einrichtung zur Schwingungsdämpfung in Form eines Torsionsschwingungsdämpfers 17, die im dargestellten Fall funktional dem Abtrieb 10 zugeordnet ist. Zu diesem Zweck ist der Torsionsschwingungsdämpfer 17 auf einer drehfest mit dem Abtrieb 10 verbundenen Welle angeordnet, wobei sowohl bei Leistungsübertragung über die Überbrückungskupplung 3 als auch über die Turbokupplung 2 der Torsionsschwingungsdämpfer 17 hinter diesen Komponenten wirksam wird. Rein räumlich in Einbaulage betrachtet ist der Torsionsschwingungsdämpfer 17 zwischen der Überbrückungskupplung 3 und der Turbokupplung 2 angeordnet. Die Integration des Torsionsschwingungsdämpfers 17 in einer modularen Baueinheit mit der Turbokupplung 2, der Überbrückungskupplung 3 sowie dem hydrodynamischen Retarder 11 ermöglicht die Schaffung einer kombinierten Anfahr- und Bremseinheit, welche als vormontierte Einheit in einem Getriebe integrierbar ist.

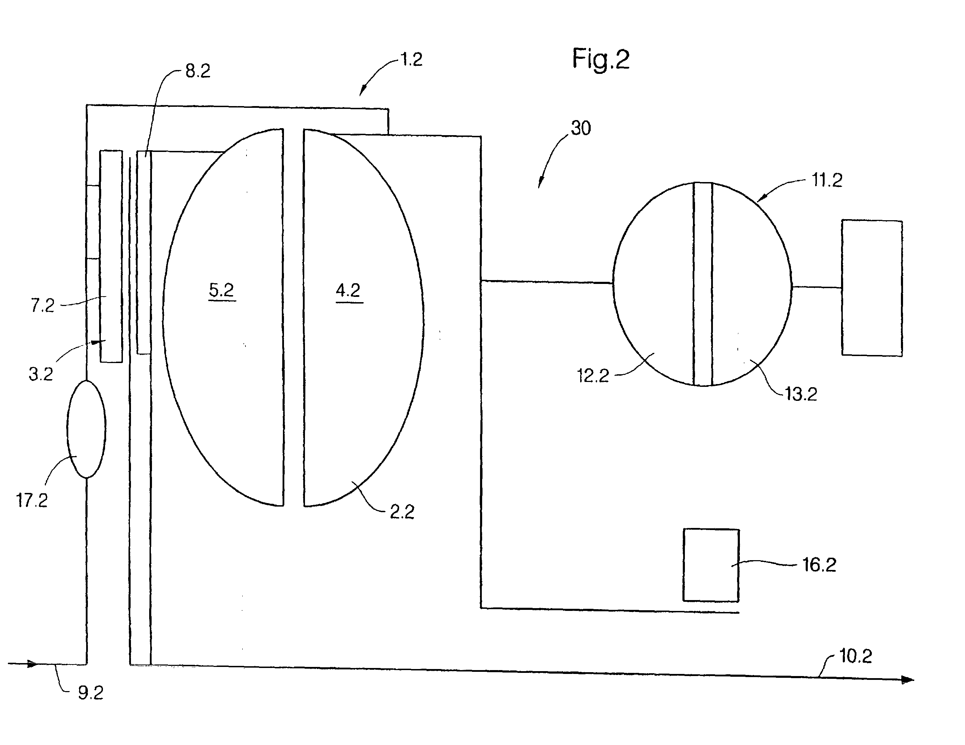

Die Figur 2 verdeutlicht in schematisch vereinfachter Darstellung eine weitere Ausführung einer erfindungsgemäß gestalteten Anfahreinheit mit einem Anfahrelement 1.2, umfassend eine Turbokupplung 2.2, eine Überbrückungskupplung 3.2, eine Bremseinrichtung 11.2 in Form eines hydrodynamischen Retarders und einen Torsionsschwingungsdämpfer 17.2. Der Grundaufbau bezüglich der Anordnung von Überbrückungskupplung 3.2, Turbokupplung 2.2 und hydrodynamischem Retarder 11.2 zueinander entspricht im wesentlichen dem in der Figur 1 beschriebenen, weshalb für gleiche Elemente die gleichen Bezugszeichen verwendet werden. Der Torsionsschwingungsdämpfer 17.2 ist hier jedoch auf der Antriebsseite 9.2 des Anfahrelementes vor den Eingängen der Übertragungskupplung 3.2 bzw. der Turbokupplung 2.2 angeordnet. Der Torsionsschwingungsdämpfer 17.2 ist im dargestellten Fall mit der Kupplungseingangsscheibe 8.2 drehfest verbunden. Räumlich erfolgt die Anordnung des Torsionsschwingungsdämpfers 17.2 in Einbaulage des Anfahrelementes 1.2 in Kraftflußrichtung im Traktionsbetrieb betrachtet vor der Überbrückungskupplung 3.2 und der Turbokupplung 2.2. Die einzelnen Komponenten Turbokupplung 2.2, Überbrückungskupplung 3.2, hydrodynamischer Retarder 11.2 und Torsionsschwingungsdämpfer 17.2 sind jedoch in unmittelbarer räumlicher Nähe zueinander angeordnet.

Die Ausführungen der Anfahreinheiten 30 gemäß der Figuren 1 und 2 beinhalten einen primärseitig angeordneten Retarder 11 bzw. 11.2, dessen Rotor 12 bzw. 12.2 mit dem Pumpenrad 4 bzw. 4.2 und damit direkt mit der Kopplung mit der Antriebsmaschine, d.h. z. B. der Kurbelwelle verbunden ist. Damit werden eine verschleißfreie Abbremsung beim Einsatz in Fahrzeugen ermöglicht und die gesetzlichen Anforderungen an die dritte unabhängige Bremse erfüllt. Entscheidend für diese Anbindung ist, daß bei Rück- und Hochschaltungen in einem, dem Anfahrelement 1 bzw. 1.2 nachgeordneten Getriebesatz keine zusätzlichen Schleppmomente durch den Retarder verursacht werden. Der Retarder 11 bzw. 11.2 wird im Fall einer Rückschaltung bezüglich seiner Bremswirkung abgeschaltet und nach erfolgter Rückschaltung mittels der mechanischen Überbrückungskupplung wieder zugeschaltet. Die Steuerung des Bremsmomentes selbst erfolgt durch Steuerung des Füllungszustandes.

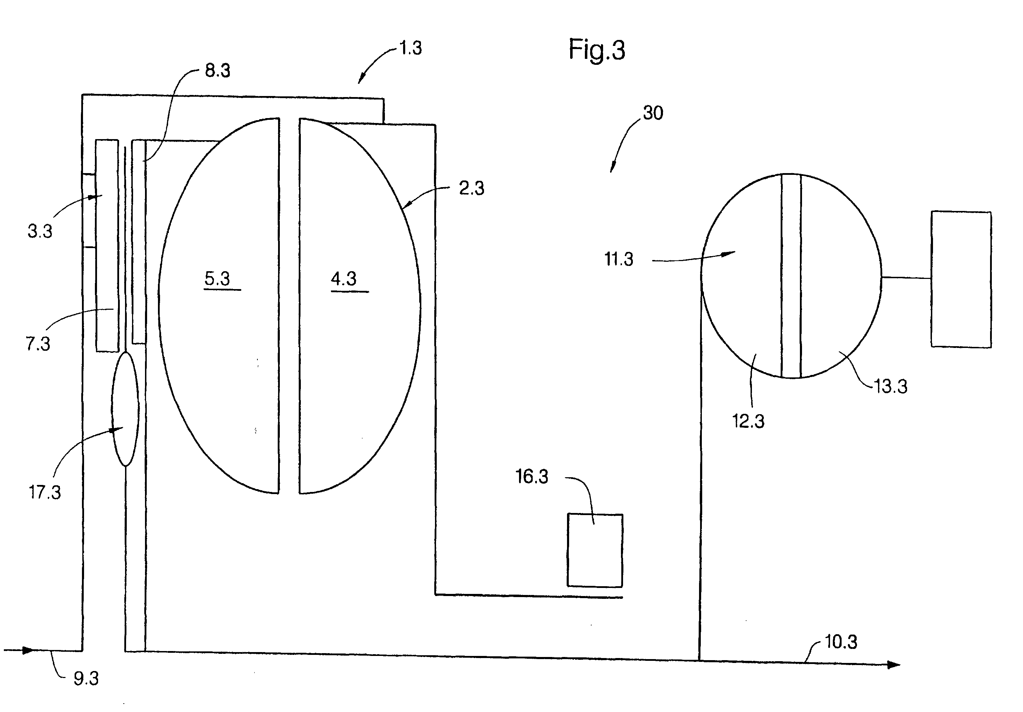

Die Figur 3 verdeutlicht eine Ausführung einer Anfahreinheit mit einem Anfahrelement 1.3 gemäß der Figur 1 bezüglich der räumlichen und funktionalen Anordnung von Überbrückungskupplung 3.3, Turbokupplung 2.3 und Torsionsschwingungsdämpfer 17.3 und der räumlichen Anordnung des hydrodynamischen Retarders 11.3. Die Anbindung des Rotors 12.3 des hydrodynamischen Retarders 11.3 erfolgt jedoch am Abtrieb 10.3 des Anfahrelementes 1.3. Dies bedeutet im einzelnen eine drehfeste Kopplung mit dem Abtrieb, d.h. dem Turbinenrad 5.3 der Turbokupplung 2.3 bzw. dem Abtrieb der Überbrückungskupplung 3.3, insbesondere der Kupplungsausgangsscheibe 9.3 und damit dem hier nicht dargestellten Eingang beispielsweise des nachgeordneten Getriebesatzes.

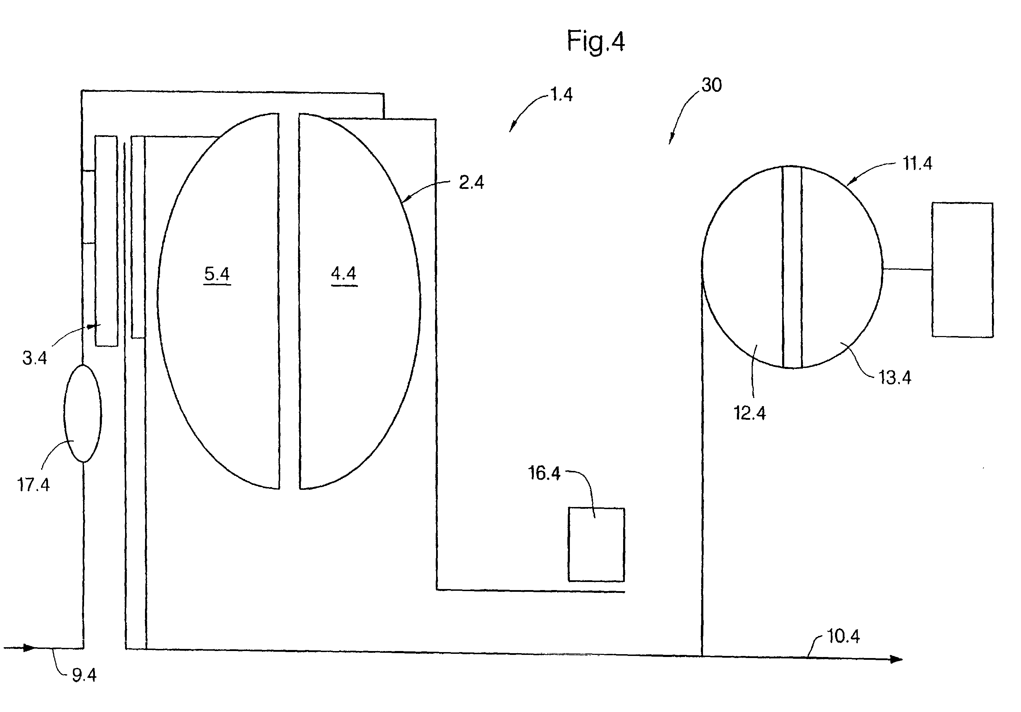

Die Figur 4 verdeutlicht eine Ausführung einer Anfahreinheit 30 mit einem Anfahrelement 1.4 gemäß Figur 2 hinsichtlich der Anordnung von Überbrückungskupplung 3.4, Turbokupplung 2.4 und Torsionsschwingungsdämpfer 17.4, wobei jedoch die Anbindung des hydrodynamischen Retarders 11.4 analog zu dem in der Figur 3 beschriebenen erfolgt.

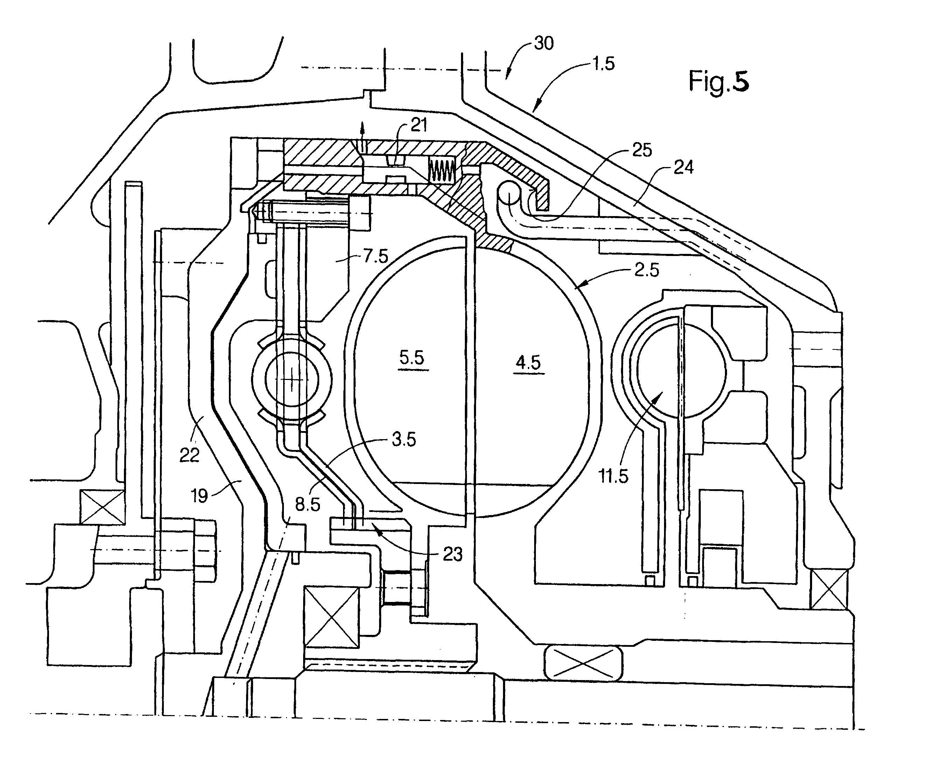

Die Figur 5 verdeutlicht eine mögliche konstruktive Ausführung einer Anfahreinheit 30 mit einem Anfahrelement 1.5, bei welcher der Schalt-, Steuer- oder Regelvorgang der Turbokupplung 2.5 weg- oder druckabhängig von der Betätigung oder Ansteuerung der Überbrückungskupplung 3.5 erfolgt. Der Grundaufbau entspricht dem in der Figur 1 beschriebenen. Für gleiche Elemente werden daher ebenfalls die gleichen Bezugszeichen verwendet.

Die Eingangsseite der Überbrückungskupplung 3.5, d.h. die Kupplungseingangsscheibe 7.5 ist mit einem Kolbenelement 25 verbunden, welches beim Lösen der Überbrückungskupplung 3.5 in axialer Richtung in Einbaulage des Anfahrelementes betrachtet verschoben wird und aufgrund der Relativbewegung auf ein in einem gemeinsamen Gehäuse 19 befindliches Druckmittel Druck ausübt, wobei der Druck als Stellgröße zur Beaufschlagung der Mittel zur Beeinflussung der Betriebsmittelversorgung der Turbokupplung 2.5 dient. Die Mittel zur Beeinflussung sind hier mit 20 bezeichnet und umfassen wenigstens eine Ventileinrichtung 21, welche in Form eines Wegeventils ausgeführt ist, das als Schaltventil oder Proportionalventil ausgeführt sein kann. Als gemeinsames Gehäuse 19 fungiert hier die Kupplungsglocke, welche mit dem Pumpenrad 2.5 drehfest verbunden ist, vorzugsweise mit diesem eine bauliche Einheit bildet und der ein Deckelelement 22 zugeordnet ist. Des weiteren ersichtlich aus Figur 5 ist die mechanische Kopplung zwischen der Kupplungsausgangsscheibe 8.5 der Überbrückungskupplung 3.5 und dem Abtrieb von der Turbokupplung 2.5, insbesondere dem Turbinenrad 5.5 der Turbokupplung, welche beispielsweise über eine formschlüssige Verbindung 23 realisiert wird. Zusätzlich besteht die Möglichkeit, zur Realisierung der Steuer- und Regelbarkeit der Turbokupplung 2.5 weitere Mittel zur Beeinflussung der Betriebsmittelversorgung vorzusehen, beispielsweise in Form eines Schöpfrohres 24, welches aus dem Arbeitsraum 6.5 gelangtes Betriebsmittel in die Kupplungsschale 25 aus dieser abführt und wieder dem Arbeitskreislauf über einen geschlossenen oder offenen Kreislauf zuführt.

Die in den Figuren 1 bis 5 dargestellten Ausführungsmöglichkeiten hinsichtlich der Kopplung der einzelnen Komponenten der Anfahreinheiten miteinander stellen mögliche Ausführungsformen dar, auf die jedoch der Schutzbereich der vorliegenden Anmeldung nicht beschränkt ist. Die Kombination von Überbrückungskupplung, Turbokupplung, Torsionsschwingungsdämpfer und hydrodynamischen Retarder und Integration in einer modularen Baueinheit bietet den Vorteil, mit einer Antriebskomponente eine Vielzahl von unterschiedlichen Aufgaben bei gleichzeitiger geringer Baugröße und hoher Funktionalität mit geringem konstruktiven Aufwand zu realisieren. Vormontiert kann die modulare Baueinheit vorgefertigt und als selbständige Antriebskomponente angeboten und gehandelt werden. Diese ist dann lediglich in bestehende Getriebekonzepte oder Neugetriebekonzepte zu integrieren. Die Anbindung an eine Drehzahl-/Drehmomentenwandlungseinrichtung kann dabei im einfachsten Fall durch Realisierung einer kraftschlüssigen und/oder formschlüssigen Kopplung erfolgen. Die konkrete konstruktive Ausgestaltung der Kopplungsmöglichkeiten der einzelnen Komponenten untereinander und mit dem Antrieb bzw. dem Abtrieb der Anfahreinheit liegen dabei im Ermessen des zuständigen Fachmannes.

### Bezugszeichenliste:

- 1, 1.2, 1.3, 1.4, 1.5: Anfahrelement
- 2, 2.2, 2.3, 2.4, 2.5: Turbokupplung
- 3, 3.2, 3.3, 3.4, 3.5: Überbrückungskupplung
- 4, 4.2, 4.3, 4.4, 4.5: Pumpenrad
- 5, 5.2, 5.3, 5.4, 5.5: Turbinenrad
- 6, 6.2, 6.3, 6.4, 6.5: torusförmiger Arbeitsraum
- 7, 7.2, 7.3, 7.4, 7.5: Kupplungseingangsscheibe
- 8, 8.2, 8.3, 8.4, 8.5: Kupplungsausgangsscheibe
- 9, 9.2, 9.3, 9.4, 9.5: Antrieb
- 10, 10.2, 10.3, 10.4: Abtrieb
- 11, 11.2, 11.3, 11.4: Bremseinrichtung, hydrodynamischer Retarder
- 12, 12.2, 12.3, 12.4: Rotor
- 13, 13.2, 13.3, 13.4: Stator
- 14: Verbindung zwischen Antrieb und Pumpenrad der Turbokupplung
- 15: Betriebsmittelversorgungssystem
- 16: Betriebsmittelfördereinrichtung
- 17, 17.2, 17.3, 17.4: Torsionsschwingungsdämpfer
- 18: Mittel zur Kühlung
- 19: Gehäuse
- 20: Mittel zur Beeinflussung der Betriebsmittelversorgung
- 21: Ventileinrichtung
- 22: Deckelelement
- 23: Formschlüssige Verbindung
- 24: Schöpfrohr
- 25: Kupplungsschale
- 26: Kolben
- 30: Anfahreinheit

## Patentansprüche

1. Anfahreinheit (30) mit einem Anfahrelement (1, 1.2a, 1.2b, 1.2c, 1.3a, 1.3b) für den Einsatz in Schaltgetrieben, insbesondere automatisierten Schaltgetrieben, in Antriebssystemen von Fahrzeugen,
das Anfahrelement weist eine An- und eine Abtriebsseite (E,A) auf; das Anfahrelement ist als Turbokupplung (2, 2.2a, 2.2b, 2.2c), umfassend wenigstens ein Pumpenrad (4, 4.2a, 4.2b, 4.2c) und ein Turbinenrad (5, 5.2a, 5.2b, 5.2c) ausgeführt;
mit einer Überbrückungskupplung (3., 3.2a, 3.2b, 3.2c);
die Überbrückungskupplung (3, 3.2a, 3.2b, 3.2c) und die Turbokupplung (2, 2.2a, 2.2b, 2.2c) sind parallel geschaltet;
der Leistungsfluß zwischen der An- und der Abtriebsseite (E,A) ist vollständig unterbrechbar,
**dadurch gekennzeichnet, daß** die vollständige Unterbrechung des Leistungsflusses duch Schaltarbeit der Überbrückungskupplung bei gleichzeitiger Entleerung oder geleerter Turbokupplung (2, 2.2a, 2.2b, 2.2c) oder in Gangstufen mit Leistungsübertragung über die Turbokupplung (2., 2.2a, 2.2b, 2.2c) durch Entleerung der Turbokupplung erfolgt.

2. Anfahreinheit (30) nach Anspruch 1, **dadurch gekennzeichnet, dass** die Abtriebsseiten von Überbrückungskupplung (3, 3.2a, 3.2b, 3.2c) und Turbokupplung (2, 2.2a, 2.2b, 2.2c) drehfest verbunden sind.

3. Anfahreinheit (30) nach Anspruch 1 oder 2, **dadurch gekennzeichnet, daß** die Überbrückungskupplung (3, 3.2, 3.3, 3.4, 3.5) als Scheibenkupplung in Lamellenbauweise ausgeführt ist.

4. Anfahreinheit (30) nach Anspruch 3, **dadurch gekennzeichnet, daß** die Überbrückungskupplung (3, 3.2, 3.3, 3.4, 3.5) und die Turbokupplung (2, 2.2, 2.3, 2.4, 2.5) in einem gemeinsamen Gehäuse (19) angeordnet sind und die Überbrückungskupplung (3, 3.2, 3.3, 3.4, 3.5) im Betriebsmittel der Turbokupplung (2, 2.2, 2.3, 2.4, 2.5) umläuft.

5. Anfahreinheit (30) nach einem der Ansprüche 1 bis 4, **dadurch gekennzeichnet, daß** diesem eine Bremseinrichtung zugeordnet ist.

6. Anfahreinheit (30) nach Anspruch 5, **dadurch gekennzeichnet, daß** die Bremseinrichtung als hydrodynamischer Retarder (11, 11.2, 11.3, 11.4, 11.5) ausgeführt ist.

7. Anfahreinheit (30) nach einem der Ansprüche 5 oder 6, **dadurch gekennzeichnet, daß** Überbrückungskupplung (3, 3.2, 3.3, 3.4), Turbokupplung (2, 2.2, 2.3, 2.4, 2.5) und Bremseinrichtung eine modulare Baueinheit bilden.

8. Anfahreinheit (30) nach einem der Ansprüche 6 oder 7, **dadurch gekennzeichnet, daß** die Bremseinrichtung mit dem Antrieb (9, 9.2, 9.3, 9.4, 9.5) gekoppelt ist.

9. Anfahreinheit (30) nach Anspruch 8, **dadurch gekennzeichnet, daß** das Pumpenrad (4, 4.2, 4.3, 4.4, 4.5) der Turbokupplung (2, 2.2, 2.3, 2.4, 2.5) und der Rotor (12, 12.2, 12.3, 12.4, 12.5) des hydrodynamischen Retarders (11, 11.2, 11.3, 11.4, 11.5) drehfest miteinander verbindbar sind.

10. Anfahreinheit (30) nach einem der Ansprüche 6 oder 7, **dadurch gekennzeichnet, daß** der Rotor (12, 12.2, 12.3, 12.4, 12.5) des hydrodynamischen Retarders (11, 11.2, 11.3, 11.4, 11.5) drehfest mit dem Abtrieb (10, 10.2, 10.3, 10.4, 10.5) der Anfahreinheit (30) verbunden ist.

11. Anfahreinheit (30) nach einem der Ansprüche 6 bis 10, **dadurch gekennzeichnet, daß** der Stator des hydrodynamischen Retarders zwischen dem Rotor des hydrodynamischen Retarders und der Turbokupplung angeordnet ist

12. Anfahreinheit (30) nach einem der Ansprüche 6 bis 10, **dadurch gekennzeichnet, daß** der Rotor (12, 12.2, 12.3, 12.4) des hydrodynamischen Retarders (11, 11.2, 11.3, 11.4, 11.5) zwischen dem Stator (13, 13.2, 13.3, 13.4, 13.5) des hydrodynamischen Retarders (11, 11,2, 11,3, 11.4, 11.5) und der Turbokupplung (2, 2.2, 2.3, 2.4, 2.5) angeordnet ist

13. Anfahreinheit (30) nach Anspruch 12, **dadurch gekennzeichnet, daß** der Rotor (12, 12.2, 12.5) des hydrodynamischen Retarders (11, 11.2, 11.5) mit dem Pumpenrad (4, 4.2 4.5) der Turbokupplung (2, 2.2, 2.5) drehfest miteinander verbunden sind.

14. Anfahreinheit (30) nach Anspruch 13, **dadurch gekennzeichnet, daß** der Rotor (12, 12.2, 12.5) des hydrodynamischen Retarders (11, 11.2, 11.5) und das Pumpenrad (4, 4.2, 4.5) der Turbokupplung (2, 2.2, 2.5) eine bauliche Einheit bilden.

15. Anfahreinheit (30) nach einem der Ansprüche 6 bis 14, **dadurch gekennzeichnet, daß** dem hydrodynamischen Retarder (11, 11.2, 11.3, 11.4, 11.5) und der Turbokupplung (2, 2.2, 2.3, 2.4, 2.5) eine feststehende Einrichtung zum Zuführen und/oder Verteilen des Betriebsmediums zugeordnet ist.

16. Anfahreinheit (30) nach Anspruch 15, **dadurch gekennzeichnet, daß** in der Einrichtung Schalt-, Pump- und Regelvorrichtungen integrierbar sind.

17. Anfahreinheit (30) nach einem der Ansprüche 1 bis 16, **dadurch gekennzeichnet, daß** diesem eine Einrichtung zur Schwingungsdämpfung zugeordnet ist.

18. Anfahreinheit (30) nach Anspruch 15, **dadurch gekennzeichnet, daß** die Einrichtung zur Schwingungsdämpfung wenigstens einen Torsionsschwingungsdämpfer (17, 17.2, 17.3, 17.4) umfaßt.

19. Anfahreinheit (30) nach einem der Ansprüche 17 oder 18, **dadurch gekennzeichnet, daß** dieses mit der Einrichtung zur Schwingungsdämpfung eine modulare Baueinheit bildet

20. Anfahreinheit (30) nach einem der Ansprüche 17 bis 19, **dadurch gekennzeichnet, daß** die Enrichtung zur Schwingungsdämpfung mit dem Eingang der Überbrückungskupplung (3.2, 3.4) verbindbar ist

21. Anfahreinheit (30) nach Anspruch 20, **dadurch gekennzeichnet, daß** die Einrichtung zur Schwingungsdämpfung räumlich vor der Überbrückungskupplung (3.2, 3.4) in Einbaulage in Kraftflußrichtung i Traktionsbetrieb betrachtet angeordnet ist.

22. Anfahreinheit (30) nach Anspruch 21, **dadurch gekennzeichnet, daß** die Einrichtung zur Schwingungsdämpfung zwischen der Überbrückungskupplung und der Turbokupplung angeordnet ist.

23. Anfahreinheit (30) nach einem der Ansprüche 17 bis 19, **dadurch gekennzeichnet, daß** die Einrichtung zur Schwingungsdämpfung mit der Abtriebsseite (10, 10.2, 10.3, 10.4) verbindbar ist.

24. Anfahreinheit (30) nach einem der Ansprüche 1 bis 23, **dadurch gekennzeichnet, daß** die voltständige Unterbrechung des Leistungsflußes durch die Überbrückungskupplung realisiert wird.

25. Schaltgetriebe, insbesondere automatisiertes Schaltgetriebe mit einer Getriebeeingangswelle und einer Getriebeausgangswelle; mit einer mit der Getriebeeingangswelle drehfest verbindbaren Anfahreinheit gemäß einem der Ansprüche 1 bis 24.

## Claims

1. A starting unit (30) with a starting element (1, 1.2a, 1.2b, 1.2c, 1.3a, 1.3b) for use in change-speed gears, especially automated change-speed gears in driving systems of vehicles, with the starting element comprising a driving and a driven side (E, A), the starting element being configured as a turbo coupling (2, 2.2a, 2.2b, 2.2c) comprising at least one pump wheel (4, 4.2a, 4.2b, 4.2c) and a turbine wheel (5, 5.2a, 5.2b, 5.2c), and with a lock-up clutch (3, 3.2a, 3.2b, 3.2c) and the lock-up clutch (3, 3.2a, 3.2b, 3.2c) and the turbo coupling (2, 2.2a, 2.2b, 2.2c) being switched in parallel, and the power flow between the driving and the driven side (E, A) being completely interruptible, **characterized in that** the complete interruption of the power flow occurs by switching work of the lock-up clutch with simultaneous emptying or emptied turbo coupling (2, 2.2a, 2.2b, 2.2c) or in gear steps with power transmission via the turbo coupling (2, 2.2a, 2.2b, 2.2c) by emptying the turbo coupling.

2. A starting unit (30) as claimed in claim 1, **characterized in that** the driven sides of the lock-up clutch (3, 3.2a, 3.2b, 3.2c) and the turbo coupling (2, 2.2a, 2.2b, 2.2c) are connected in a torsionally rigid fashion.

3. A starting unit (30) as claimed in claim 1 or 2, **characterized in that** the lock-up clutch (3, 3.2, 3.3, 3.4, 3.5) is arranged as a disk clutch in multiple-disk design.

4. A starting unit (30) as claimed in claim 3, **characterized in that** the lock-up clutch (3, 3.2, 3.3, 3.4, 3.5) and the turbo coupling (2, 2.2, 2.3, 2.4, 2.5) are arranged in a common housing (19) and the lock-up clutch (3, 3.2, 3.3, 3.4, 3.5) revolves in the operating medium of the turbo coupling (2, 2.2, 2.3, 2.4, 2.5).

5. A starting unit (30) as claimed in one of the claims 1 to 4, **characterized in that** the same is associated with a braking device.

6. A starting unit (30) as claimed in claim 5, **characterized in that** the braking device is arranged as a hydrodynamic retarder (11, 11.2, 11.3, 11.4, 11.5).

7. A starting unit (30) as claimed in one of the claims 5 or 6, **characterized in that** the lock-up clutch (3, 3.2, 3.3, 3.4, 3.5), the turbo coupling (2, 2.2, 2.3, 2.4, 2.5) and the braking device form a modular unit.

8. A starting unit (30) as claimed in one of the claims 6 or 7, **characterized in that** the braking device is coupled with the drive (9, 9.2, 9.3, 9.4, 9.5).

9. A starting unit (30) as claimed in claim 8, **characterized in that** the pump wheel (4, 4.2, 4.3, 4.4, 4.5) of the turbo coupling (2, 2.2, 2.3, 2.4, 2.5) and the rotor (12, 12.2, 12.3, 12.4, 12.5) of the hydrodynamic retarder (11, 11.2, 11.3, 11.4, 11.5) can be connected with each other in a torsionally rigid fashion.

10. A starting unit (30) as claimed in one of the claims 6 or 7, **characterized in that** the rotor (12, 12.2, 12.3, 12.4, 12.5) of the hydrodynamic retarder (11, 11.2, 11.3, 11.4, 11.5) is connected in a torsionally rigid manner with the power take-off (10, 10.2, 10.3, 10.4, 10.5) of the starting unit (30).

11. A starting unit (30) as claimed in one of the claims 6 to 10, **characterized in that** the stator of the hydrodynamic retarder is arranged between the rotor of the hydrodynamic retarder and the turbo coupling.

12. A starting unit (30) as claimed in one of the claims 6 to 10, **characterized in that** the rotor (12, 12.2, 12.3, 12.4) of the hydrodynamic retarder (11, 11.2, 11.3, 11.4, 11.5) is arranged between the stator (13.13.2, 13.3, 13.4, 13.5) of the hydrodynamic retarder (11, 11.2, 11.3, 11.4, 11.5) and the turbo coupling (2, 2.2, 2.3, 2.4, 2.5).

13. A starting unit (30) as claimed in claim 12, **characterized in that** the rotor (12, 12.2, 12.5) of the hydrodynamic retarder (11, 11.2, 11.5) is torsionally rigidly connected with the pump wheel (4, 4.2, 4.5) of the turbo coupling (2, 2.2, 2.5).

14. A starting unit (30) as claimed in claim 13, **characterized in that** the rotor (12, 12.2, 12.5) of the hydrodynamic retarder (11, 11.2, 11.5) and the pump wheel (4, 4.2, 4.5) of the turbo coupling (2, 2.2, 2.5) form a modular unit.

15. A starting unit (30) as claimed in one of the claims 6 to 14, **characterized in that** a fixed device for supplying and/or distributing the operating medium is assigned to the hydrodynamic retarder (11, 11.2, 11.3, 11.4, 11.5) and the turbo coupling (2, 2.2, 2.3, 2.4, 2.5).

16. A starting unit (30) as claimed in claim 15, **characterized in that** switch, pump and control apparatuses can be integrated in the device.

17. A starting unit (30) as claimed in one of the claims 1 to 16, **characterized in that** a device for vibration-damping is associated with the same.

18. A starting unit (30) as claimed in claim 15, **characterized in that** the device for vibration-damping comprises at least one torsional vibration damper (17, 17.2, 17.3, 17.4).

19. A starting unit (30) as claimed in one of the claims 17 or 18, **characterized in that** the same forms a modular unit with the device for vibration-damping.

20. A starting unit (30) as claimed in one of the claims 17 to 19, **characterized in that** the device for vibration-damping can be connected with the input of the lock-up clutch (3.2, 3.4).

21. A starting unit (30) as claimed in claim 20, **characterized in that** the device for vibration-damping is arranged in a spatial respect before the lock-up clutch (3.2, 3.4) in the mounted position in power flux direction i in traction operation.

22. A starting unit (30) as claimed in claim 21, **characterized in that** the device for vibration-damping is arranged between the lock-up clutch and the turbo coupling.

23. A starting unit (30) as claimed in one of the claims 17 to 19, **characterized in that** the device for vibration-damping can be connected with the power take-offside (10, 10.2, 10.3, 10.4).

24. A starting unit (30) as claimed in one of the claims 1 to 23, **characterized in that** the complete interruption of the power flow is realized by the lock-up clutch.

25. A switch-gear, especially an automated switch-gear, with a transmission input shaft and a transmission output shaft and with a starting unit according to the claims 1 to 24 which can be connected with the transmission input shaft in a torsionally rigid fashion.

## Revendications

1. Unité de démarrage (30) avec un élément démarreur (1, 1.2a, 1.2b, 1.2c, 1.3a, 1.3b) pour une utilisation dans des boîtes de vitesses, en particulier des boîtes de vitesses automatiques, dans des systèmes d'entraînement de véhicules, dans laquelle
l'élément démarré présente un côté d'entrée et un côté de sortie (E, A) ;
l'élément démarré est construit comme un embrayage hydraulique (2, 2.2a, 2.2b, 2.2c) comprenant au moins une roue de pompe (4, 4.2a, 4.2b, 4.2c) et une roue de turbine (5, 5.2a, 5.2b, 5.2c), avec un embrayage à prise directe (3, 3.2a, 3.2b, 3.2c) ;
l'embrayage à prise directe (3, 3.2a, 3.2b, 3.2c) et l'embrayage hydraulique (2, 2.2a, 2.2b, 2.2c) étant montés en parallèle ;
le flux de puissance entre le côté menant et le côté mené (E, A) pouvant être complètement interrompu,
**caractérisée en ce que** l'interruption complète du flux de puissance est obtenue par l'actionnement de l'embrayage à prise directe pendant la vidange de l'embrayage hydraulique (2, 2.2a, 2.2b, 2.2c) ou lorsque celui-ci est vide ou par l'embrayage hydraulique lors des passages de rapports avec transmission de la puissance par l'embrayage hydraulique (2, 2.2a, 2.2b, 2.2c).

2. Unité de démarrage (30) selon la revendication 1, **caractérisée en ce que** les côtés de sortie de l'embrayage à prise directe (3, 3.2a, 3.2b, 3.2c) et de l'embrayage hydraulique (2, 2.2a, 2.2b, 2.2c) sont reliés de manière solidaire en rotation.

3. Unité de démarrage (30) selon la revendication 1 ou 2, **caractérisée en ce que** l'embrayage à prise directe (3, 3.2, 3.3, 3.4, 3.5) est conçu comme un accouplement à disques à lamelles.

4. Unité de démarrage (30) selon la revendication 3, **caractérisé en ce que** l'embrayage à prise directe (3, 3.2, 3.3, 3.4, 3.5) et l'embrayage hydraulique (2, 2.2, 2.3, 2.4, 2.5) sont disposés dans un même carter (19) et l'embrayage à prise directe (3, 3.2, 3.3, 3.4, 3.5) tourne dans le fluide de fonctionnement de l'embrayage hydraulique (2, 2.2, 2.3, 2.4, 2.5).

5. Unité de démarrage (30) selon l'une quelconque des revendications 1 à 4, **caractérisée en ce qu'**elle est associée à un dispositif de freinage.

6. Unité de démarrage (30) selon la revendication 5, **caractérisée en ce que** le dispositif de freinage est construit comme un retardateur hydrodynamique (11, 11.2, 11.3, 11.4, 11.5).

7. Unité de démarrage (30) selon l'une quelconque des revendications 5 ou 6, **caractérisée en ce que** l'embrayage à prise directe (3, 3.2, 3.3, 3.4), l'embrayage hydraulique (2, 2.2, 2.3, 2.4, 2.5) et le dispositif de freinage forment une unité constructive modulaire.

8. Unité de démarrage (30) selon l'une quelconque des revendications 6 ou 7, **caractérisée en ce que** le dispositif de freinage est couplé avec l'entraînement (9, 9.2, 9.3, 9.4, 9.5).

9. Unité de démarrage (30) selon la revendication 8, **caractérisée en ce que** la roue de pompe (4, 4.2, 4.3, 4.4, 4.5) de l'embrayage hydraulique (2, 2.2, 2.3, 2.4, 2.5) et le rotor (12, 12.2, 12.3, 12.4, 12.5) du retardateur hydrodynamique (11, 11.2, 11.3, 11.4, 11.5) peuvent être reliés de manière solidaire en rotation.

10. Unité de démarrage (30) selon l'une quelconque des revendications 6 ou 7, **caractérisée en ce que** le rotor (12, 12.2, 12.3, 12.4, 12.5) du retardateur hydrodynamique (11, 11.2, 11.3, 11.4, 11.5) est relié de manière solidaire en rotation avec le côté de sortie (10, 10.2, 10.3, 10.4, 10.5) de l'unité de démarrage (30).

11. Unité de démarrage (30) selon l'une quelconque des revendications 6 à 10, **caractérisée en ce que** le stator du retardateur hydrodynamique est disposé entre le rotor du retardateur hydrodynamique et l'embrayage hydraulique.

12. Unité de démarrage (30) selon l'une quelconque des revendications 6 à 10, **caractérisée en ce que** le rotor (12, 12.2, 12.3, 12.4) du retardateur hydrodynamique (11, 11.2, 11.3, 11.4, 11.5) est disposé entre le stator (13, 13.2, 13.3, 13.4, 13.5) du retardateur hydrodynamique (11, 11.2,11.3, 11.4, 11.5) et l'embrayage hydraulique (2, 2.2, 2.3, 2.4, 2.5).

13. Unité de démarrage (30) selon la revendication 12, **caractérisée en ce que** le rotor (12, 12.2, 12.5) du retardateur hydrodynamique (11, 11.2, 11.5) est relié de manière solidaire en rotation avec la roue de pompe (4, 4.2, 4.5) de l'embrayage hydraulique (2, 2.2, 2.5).

14. Unité de démarrage (30) selon la revendication 13, **caractérisée en ce que** le rotor (12, 12.2, 12.5) du retardateur hydrodynamique (11, 11.2, 11.5) et la roue de pompe (4, 4.2, 4.5) de l'embrayage hydraulique (2, 2.2, 2.5) forment une unité constructive.

15. Unité de démarrage (30) selon l'une quelconque des revendications 6 à 14, **caractérisée en ce qu'**un dispositif stationnaire pour l'alimentation et/ou la distribution du fluide de fonctionnement est associé au retardateur hydrodynamique (11, 11.2, 11.3, 11.4, 11.5) et à l'embrayage hydraulique (2, 2.2, 2.3, 2.4, 2.5).

16. Unité de démarrage (30) selon la revendication 15, **caractérisée en ce que** des dispositifs de commutation, de pompage et de régulation peuvent être intégrés dans le dispositif.

17. Unité de démarrage (30) selon l'une quelconque des revendications 1 à 16, **caractérisée en ce qu'**elle est associée à un dispositif pour l'amortissement des vibrations.

18. Unité de démarrage (30) selon la revendication 15, **caractérisée en ce que** le dispositif pour l'amortissement des vibrations comprend au moins un amortisseur de vibrations en torsion (17, 17.2, 17.3, 17.4).

19. Unité de démarrage (30) selon l'une quelconque des revendications 17 ou 18, **caractérisée en ce qu'**elle forme une unité constructive avec le dispositif pour l'amortissement des vibrations.

20. Unité de démarrage (30) selon l'une quelconque des revendications 17 à 19, **caractérisée en ce que** le dispositif pour l'amortissement des vibrations peut être relié à l'entrée de l'embrayage à prise directe (3.2, 3.4).

21. Unité de démarrage (30) selon la revendication 20, **caractérisée en ce que** le dispositif pour l'amortissement des vibrations est localisé devant l'embrayage à prise directe (3.2, 3.4) dans la position de montage dans le sens du flux de puissance en mode de traction.

22. Unité de démarrage (30) selon la revendication 21, **caractérisée en ce que** le dispositif pour l'amortissement des vibrations est disposé entre l'embrayage à prise directe et l'embrayage hydraulique.

23. Unité de démarrage (30) selon l'une quelconque des revendications 17 ou 19, **caractérisée en ce que** le dispositif pour l'amortissement des vibrations peut être relié au côté de sortie (10, 10.2, 10.3, 10.4).

24. Unité de démarrage (30) selon l'une quelconque des revendications 1 à 23, **caractérisé en ce que** l'interruption complète du flux de puissance est réalisée par l'embrayage à prise directe.

25. Boîte de vitesses, en particulier boîte de vitesses automatique, avec un arbre d'entrée de boîte et un arbre de sortie de boîte, avec une unité de démarrage selon l'une quelconque des revendications 1 à 24 pouvant être reliée de manière solidaire en rotation à l'arbre d'entrée de boîte.
